# EUROPEAN PATENT SPECIFICATION

(11) **EP 2 299 113 B1**
(45) Date of publication and mention of the grant of the patent: **03.10.2012**
(21) Application number: 09169867.0
(22) Date of filing: 09.09.2009
(51) Int. Cl.: F03G 1/00, E06B 9/42

(54) **Roller screen device provided with a spring motor**
Rollenrostvorrichtung mit Federmotor
Dispositif de store à rouleaux comportant un moteur à ressort

(43) Date of publication of application: 23.03.2011
(73) Proprietor: Hunter Douglas Industries B.V., 3071 EL Rotterdam (NL)
(72) Inventor: De Haan, Mark, 2024 TB Haarlem (NL); Fransen, Arnoud, 2023 VK Haarlem (NL)
(74) Representative: Hesselink, Dinah Elisabeth

(56) References cited:
- WO-A1-2008/141389
- DE-U1-202005 018 484
- FR-A1- 2 314 995
- US-A- 6 155 328

## Description

The invention relates to a roller screen according to the preamble of claim 1. Such a roller screen is known from FR-A-2.314.995 which is considered as the closest prior art, or US-A-6.155.320.

The magnitude of the spring force caused by the spring motor (specifically by its torsion spring) greatly determines the comfort of use of the roller screen device. If the spring force is too low the roller screen will not open fully and if the spring force is too high the roller screen opens violently which is considered as disturbing for users and which brings along tne risk of damaging the roller screen device.

Among others the optimal spring force depends on the manner of mounting of the roller screen device of a window or door casing. In a known spring motor the spring force only can be set when the spring motor is mounted in the housing of the roller screen device.

It is an object of the present invention to provide an improved roller screen of the above type.

Thugs, in accordance with the present invention the roller screen is characterized as set forth in claim 1.

The invention allows to set the spring force in the spring motor independently from the housing. That means that the spring force already may be set to a desired value before the spring motor is installed in a housing, even before being installed in the screen winding tube. The spring force may be set in the spring motor in the production facility after which the spring motor is brought into its inoperative position in which the spring force is maintained. After being installed in the roller screen device the spring motor is brought into its operative position in which the spring force can function as desired in such a device.

Because the control pin and second part comprise torque transmission means for transmitting to the second part a torque which is applied to the control pin, the control pin also may be used to rotate the second part relative to the first part for creating/setting the desired spring force of the torsion spring/spring motor.

The transmission device offers the possibility of adjusting the spring force by rotating the gear wheel without disassembling the roller screen device. Conveniently the position of the transmission device (e.g. worm wheel) will be such that it remains accessible (for example using a screw driver) irrespective the position of the roller screen device within a window or door frame.

For adapting a defective spring motor it is possible to remove the spring motor and replace it by a new one of which the spring force already has been created before installation, as discussed in the previous paragraph. A ) similar procedure also may be used when another part of a roller screen device has to be replaced, e.g. a defective screen. In latter case a new pre-tensioned spring motor inclusive new screen may be installed, or a new screen may be mounted to the original spring motor which maintains its spring force during the entire process of removal and reinstalling.

Preferable the first and second part are provided with cooperating coupling means which in the operative position of the spring motor are not in engagement with each other and which in the non-operative position of the spring motor are in engagement with each other. This is a simple, yet effective manner of realising the operative and non-operative positions.

More preferably the coupling means of the first and second part are brought into and out of engagement with each other by a relative displacement of the first and second part in parallel to the centre line of the torsion spring. When mounted within a screen winding tube this means a longitudinal displacement within said tube.

When the torsion spring is dimensioned such that it biases the first and second parts towards their engaged position, the engaged position is the default position in which any created spring force is maintained automatically.

In another embodiment of the spring motor according to the present invention the coupling means of the first and second part in their engaged position may allow a limited relative rotation between the first and second parts, which, among others, may be favourable for alignment purposes during mounting and dismounting procedures.

In a practical embodiment the coupling means of the first and second part are provided on frontal surfaces of said parts facing each other.

Generally the coupling means of the first and second part may comprise cooperating projections and recesses, although also other constructions are conceivable too.

In a preferred embodiment the relative displacement of the first and second part in parallel to the centre line of the torsion spring is caused by can displacement of the second part in said direction. For example such a displacement of the second part may be caused when the control pin is positionable through the first part for engaging the second part.

After being positioned said control pin extends through the first part and engages the second part such that latter is disengaged from the first part and the spring motor is in its operative position. In this position the control pin further engages the housing, such that it creates the connection between the housing and the second part.

It is possible too that the control pin and second part comprise cooperating locking means for locking the first and second part in the engaged position. As a result the control pin has a second function, that is maintaining the engaged position of the first and second position, for example when a spring motor is transported and is subject to shocks which otherwise could separate the first and second part causing the spring force to rotate both parts relative to each other.

Specifically the locking means may comprise at least one projection on the control pin which by a relative rotation with respect to the second part is positionable in a corresponding undercut groove of the second part. The control pin also might cooperate with an auxiliary part positioned externally of the housing and preventing the control pin from getting loose prematurely.

When said relative rotation is in a sense corresponding with the relative rotation between the first and second part caused by the torsion spring, the spring force strives to keep the control pin within said undercut groove.

Hereinafter the invention will be elucidated while referring to the drawings, in which
Fig.1 shows an exploded view of an assembly of spring motor with screen and screen winding tube;
Fig.2 shows the assembled assembly of fig 1 spaced apart from a housing;
Fig.3 shm\ls the assembled assembly of fig 1 combined with the housing for forming a complete roller screen device;
Fig.4 shows on a larger scale and partially cut away a detail of the assembly of first and second parts during introduction of a control pin;
Fig.5 shows a view similar to fig.4 but at a later stage;
Fig.6 shows a view similar to fig.4 but at a still later stage with first and second part disengaged;
Fig.7 illustrates in perspective a longitudinal section through a shaft with attached second part and control pin;
Fig.8 shows an exploded view of part of the housing with gear wheel, worm wheel and control pin, and
Fig.9 shows an assembled view of the parts illustrated in fig.8.

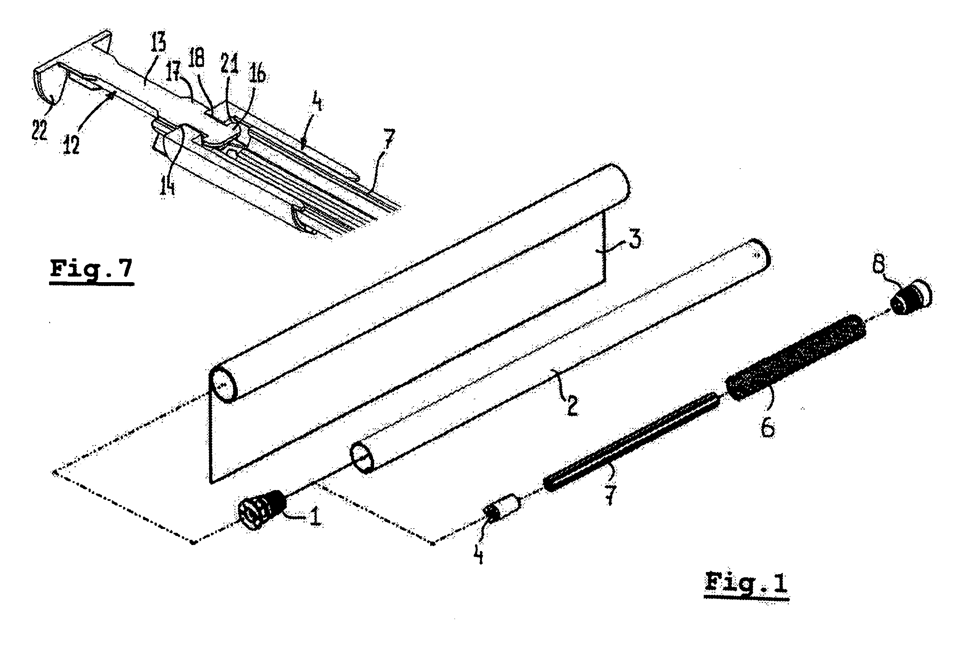

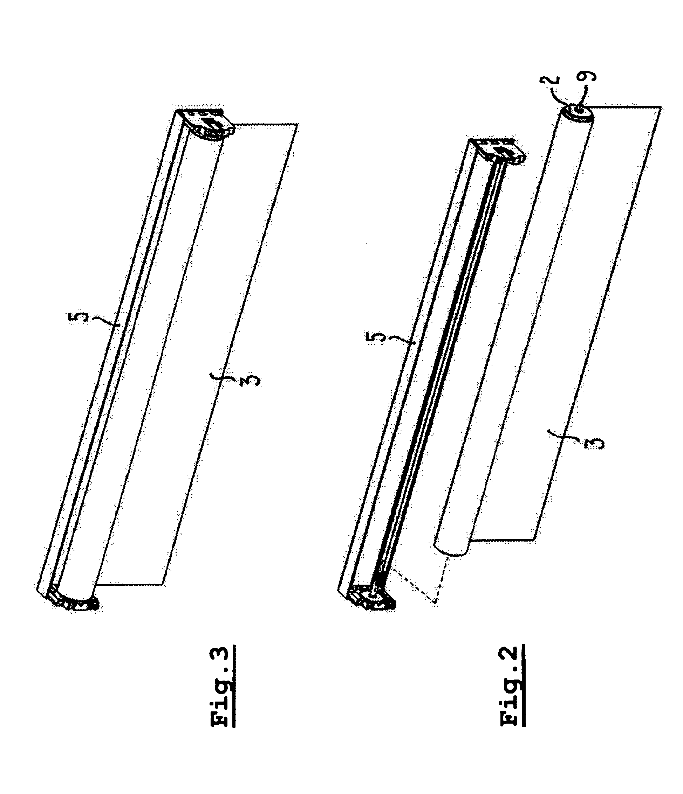

A spring motor for use in a roller screen device comprises, as illustrated in figure 1, a first part 1 to be connected non-rotatably to a screen winding tube 2 which will carry a flexible screen (or mesh) 3, a second part 4 to be connected non-rotatably (in a manner to be described later) to a stationary housing 5 (see fig.2) and a torsion spring 6 connecting the first part 1 with the second part 4. In the illustrated embodiment this connection occurs indirectly through a shaft 7 which at its one (in fig.1 left) end is connected to the second part 4 and at its opposite (in fig.1 right) end is connected to an spring-shaft connector 8. The torsion spring 6 then extends between the first part 1 and spring-shaft connector 8.

The winding tube 2 further will comprise a stub 9 (see fig.2) with which its corresponding end will be rotatably journalled in the housing 5. The winding tube at its opposite end will be journalled in a manner to be described later.

The assembly of spring motor, winding tube 2 and screen 3 is assembled with the stationary housing 5 as illustrated in fig. 2 for obtaining a complete roller screen device as illustrated in fig. 3 which may be mounted to a window or door frame.

The spring motor has a first operative position in which the first part 1 can rotate relative to the second part 4, and a second inoperative position in which the first part 1. cannot freely rotate with respect to the second part 4. an the operative position the roller screen device is ready for use and the torsion spring 6 will urge (rotate) the winding tube 2 to a position in which the screen 3 is wound onto the winding tube. For closing the device one has to pull on the screen 3 for winding it off from the winding tube 2 which will rotate against the spring force of the torsion spring 6.

The first part 1 and second part 4 are provided with cooperating coupling means which in the operative position of the spring motor are not in engagement with each other and which in the non-operative position of the spring motor are in engagement with each other . In the illustrated embodiment the coupling means of the first part 1 and second part 4 comprise cooperating projections and recesses 10 provided on frontal surfaces of said parts facing each other.

The coupling means 10 of the first and second part are brought into and out of engagement with each other by a relative displacement of the first and second part in parallel to the centre line of the torsion spring 6 (in parallel to the centre line of the winding tube 2). Specifically, in the present embodiment, such relative displacement of the first and second parts 1,4 is caused by a displacement of the second part 4 in said direction. During such a displacement that the first and second parts 1,4 are brought out of engagement, the torsion spring 6 will be lengthened.

Preferably the torsion spring 6 is dimensioned such that it biases the first and second part towards their engaged position.

The coupling means 10 of the first part 1 and second part 4 in their engaged position allow a limited relative rotation between the first and second parts, for example because the circumferential extent of the projections is smaller that the circumferential extent of the corresponding recesses.

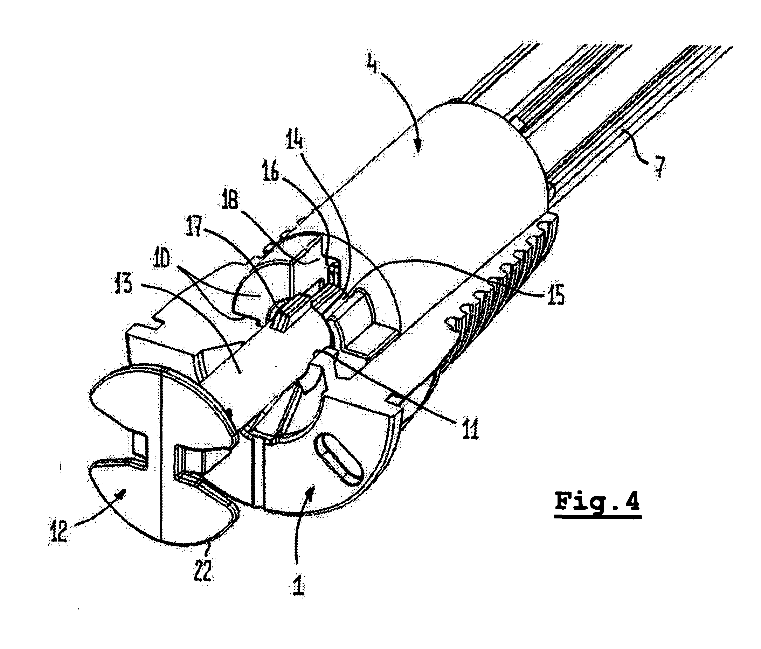

Referring to fig.4 a cut away view of a first part 1 with engaged second part 4 is illustrated. The first part 1 has a central passage 11 through which a control pin 12 is positionable for engaging the second part 4. The control pin 12 basically comprises a main shaft 13 with a shoulder 14 and a forward extension 15 carrying at its tip radially extending wings 16. The main shaft 13 comprises guide wings 17.

The control pin 12 is introduced into the central passage 11 of the first part. The guide wings 17 will cooperate with corresponding guide channels (not visible) in the wall of the central passage 11 for aligning the wings 16 at the tip of the extension 15 with corresponding channels 18 in the second part 4 (which still is in engagement with the first part 1).

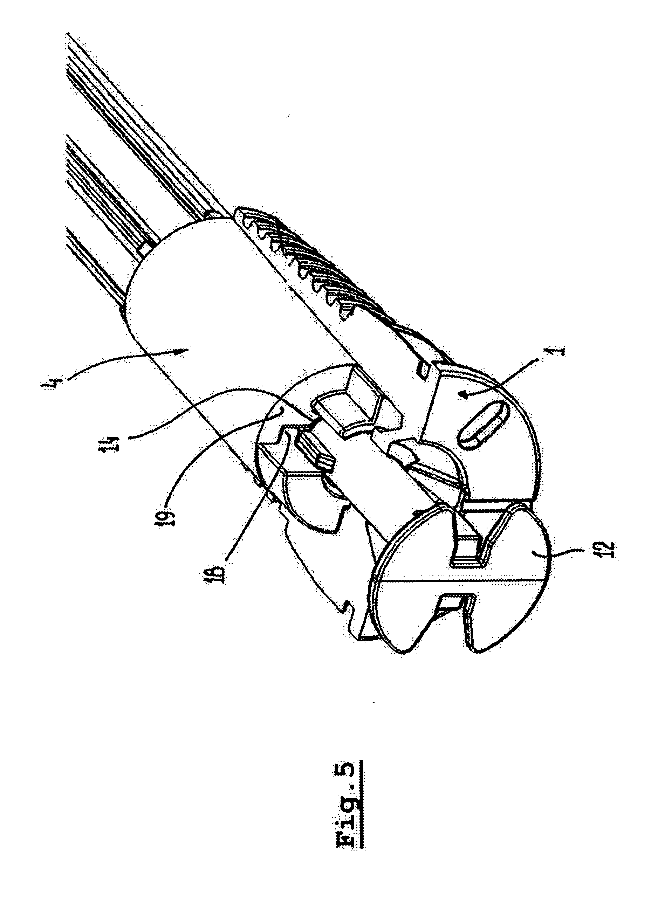

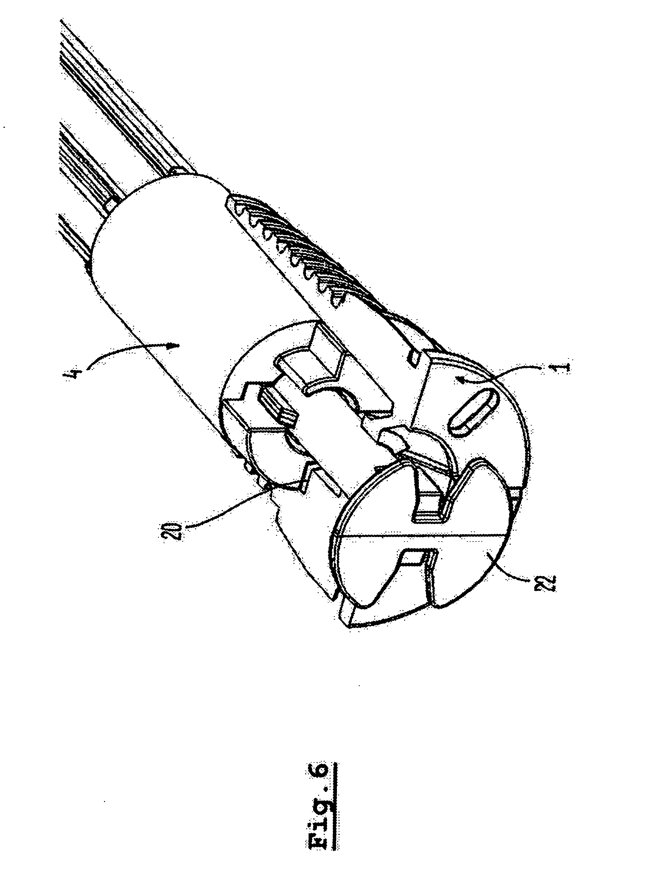

The shoulder 14 of the pin 12 will abut a frontal surface 19 of the second part 4 (fig. 5) and the second part 4 will be pushed away from the first part 1 (fig 6), such that these parts 1,4 will be disengaged (see gap 20 in fig.6).

The guide wings 17 of the control pin 12 and the projections 10 of the second part 4 will act as torque transmission means for transmitting to the second part 4 a torque which is applied to the control pin 12. As a result the second part 4, in its disengaged position as illustrated in fig.6, can be rotated relative to the first part 1 for adjusting the tension of the torsion spring 6. When the correct spring force is created the control pin 12 is removed and the first and second part 1,4 are engaged again.

Through a rotation of the control pin 12 relative to the second part 4 (in a sense corresponding with the relative rotation between the first and second part caused by the torsion spring 6) the wings 16 at the tip of the extension 15 of the control pin 12 are positionable in corresponding undercut grooves 21 (see fig.7) connecting to the channels 18 of the second part 4 when latter is still in engagement with the first part 1. An auxiliary part (not shown) may be positioned between the facing sides of the widened head 22 of the control pin and first part 1, limiting the movement of the control pin 12 such that its wings 16 may still enter the undercut grooves 21 while avoiding the second part 4 to be disengaged from the first part 1. As such the wings 16 and undercut grooves 21 define cooperating locking means for locking the first and second part 1,4 in the engaged position.

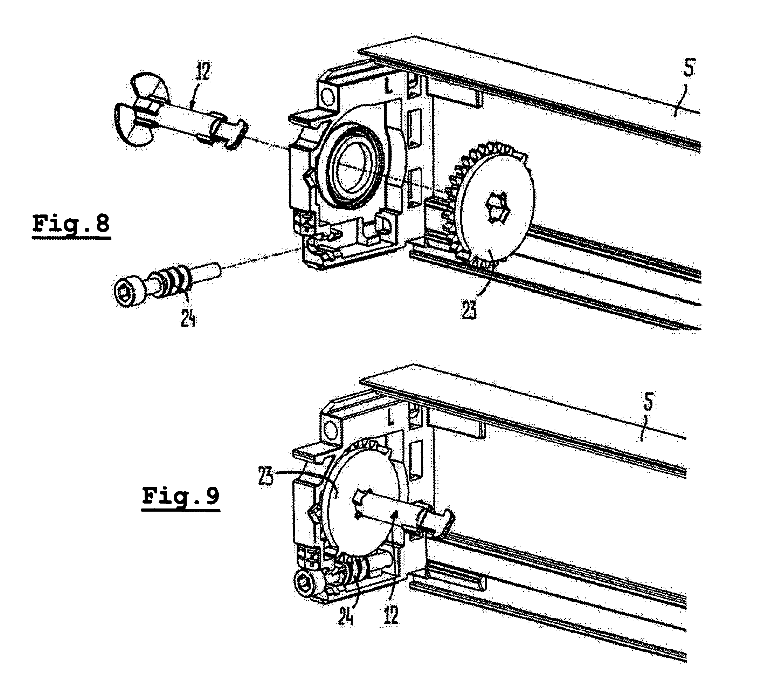

Figs. 8 and 9 show part of the housing 5 of a roller screen device according to the invention. The control pin 12 is connectable non-rotatably to a gear wheel 23 positioned in the housing 5 which by means of a transmission device, such as a worm wheel 24 or alike, is rotatable for rotating the pin, and thus the second part 4, relative to the housing. As such the spring force may be adjusted in the mounted state of the device by operating the worm wheel 24, for example using a hexagonal tool.

The main shaft 13 functions as a bearing upon which the first part 1 (and thus the screen winding tube 2) may rotate freely (as caused by the torsion spring or by manually operating the device).

The invention is not limited to the embodiment described above which may be varied widely within the scope of the invention as defined by the appending claims,

## Claims

1. Roller screen device Comprising a stationary housing (5) and a screen winding tube (2) rotatably positioned within said housing, and provided with a spring motor comprising a first part (1) to be connected non-rotatably to the screen winding tube, a second part (4) to be connected non-rotatably to the housing and a torsion spring (6) connecting the first part with the second part, wherein the spring motor has a first operative position in which the first part (1) can rotate relative to the second part (4) and a second inoperative position in which the first part cannot freely rotate with respect to the second part, **characterized in that**, the spring motor comprises a control pin (12) which together with the second part (4) comprise torque transmission means (17,10) for transmitting to the second part (4) a torque which is applied to the control pin (12), and which control pin (12) is connectable non-rotatably to a gear wheel (23) the positioned in the housing (5) which by means of a transmission device (24) is rotatable for rotating the pin (12) and thus the second part (4). relative to the housing.

2. Roller screen according to claim 1, wherein the first (1) and second part (4) are provided with cooperating coupling means (10) which in the operative position of the spring motor are not in engagement with each other and which in tne non-operative position of the spring motor are in engagement with each other.

3. Roller screen according to claim 2, wherein the coupling means (10) of the first (1) and second part (4) are brought into and out of engagement with each other by a relative displacement of the first and second part in parallel 1 to the centre line of the torsion spring (6).

4. Roller screen according to claim 3, wherein the torsion spring (6) is dimensioned such that it biases the first (1) and second part (4) towards their engaged position.

5. Roller screen according to any of the claims 2-4, wherein the coupling means (10) of the first (1) and second part (4) in their engaged position allow a limited relative rotation between the first and second parts.

6. Roller screen according to any of the claims 2-5, wherein the coupling means (10) of the first (1) and second part (4) are provided on frontal surfaces of said parts facing each other.

7. Roller screen according to any of the claims 2-6, wherein the coupling means (10) of the first (1) and second part (4) comprise cooperating projections and recesses.

8. Roller screen according to any of the previous claims and claims 3, wherein the relative displacement of the first (1) and second part (4) in parallel to the centre line of the torsion spring (6) is caused by a displacement of the second part in said direction.

9. Roller screen according to any of the previous claims, wherein the control pin (12 ) is positionable through the first part (1) for engaging the second part (4).

10. Roller screen according to claim 9, wherein the control pin (12) and second part (4) comprise cooperating looking means (10, 21) for locking the first (1) and second part (4) in the engaged position.

11. Roller screen according to claim 10, wherein the locking means comprise at least one projection (16) on the control pin (12) which by a relative rotation with respect to the second part (4) is positionable in a corresponding undercut groove (2) of the second part.

12. Roller screen according to claim 11, wherein said relative rotation is in a sense corresponding with the relative rotation between the first (1) and second part (4) caused by the torsion spring (6).

## Patentansprüche

1. Rollblendenvorrichtung, aufweisend ein stationäres Gehäuse (5) und ein Blendenwickelrohr (2), das drehbar innerhalb des Gehäuses positioniert ist und mit einem Federmotor versehen ist, aufweisend einen ersten Teil (1) zum nicht-drehbaren Verbinden mit dem Blendenwickelrohr, einen zweiten Teil (4) zum nicht-drehbaren Verbinden mit dem Gehäuse, und eine Torsionsfeder (6), die den ersten Teil mit dem zweiten Teil verbindet, wobei der Federmotor eine erste Betriebsposition, in der sich der erste Teil (1) bezüglich des zweiten Teils (4) drehen kann, und eine zweite Ruheposition hat, in der sich der erste Teil bezüglich des zweiten Teils nicht frei drehen kann, **dadurch gekennzeichnet, dass** der Federmotor einen Steuerungsstift (12) aufweist, der zusammen mit dem zweiten Teil (4) Drehmomentübertragungsmittel (17, 10) zum Übertragen eines auf den Steuerungsstift (12) aufgebrachten Drehmoments auf den zweiten Teil (4) aufweist, und wobei der Steuerungsstift (12) nicht-drehbar mit einem Zahnrad (23) verbindbar ist, das in dem Gehäuse (5) positioniert ist, das mittels einer Übertragungsvorrichtung zum Drehen des Stifts (12) und somit des zweiten Teils (4) bezüglich des Gehäuses drehbar ist.

2. Rollblende gemäß Anspruch 1, wobei der erste (1) und der zweite Teil (4) mit zusammenwirkenden Kupplungsmitteln (10) versehen sind, die in der Betriebsposition des Federmotors nicht miteinander in Eingriff sind und in der Ruheposition des Federmotors miteinander in Eingriff sind.

3. Rollblende gemäß Anspruch 2, wobei die Kupplungsmittel (10) des ersten (1) und des zweiten Teils (4) durch eine relative Verlagerung des ersten und des zweiten Teils parallel zu der Mittellinie der Torsionsfeder (6) miteinander in Eingriff und außer Eingriff gebracht werden.

4. Rollblende gemäß Anspruch 3, wobei die Torsionsfeder (6) derart bemessen ist, dass sie den ersten (1) und den zweiten Teil (4) zu ihrer Eingriffsposition hin vorspannt.

5. Rollblende gemäß irgendeinem der Ansprüche 2 bis 4, wobei die Kupplungsmittel (10) des ersten (1) und des zweiten Teils (4) in ihrer Eingriffsposition eine begrenzte relative Drehung zwischen dem ersten und dem zweiten Teil zulassen.

6. Rollblende gemäß irgendeinem der Ansprüche 2 bis 5, wobei die Kupplungsmittel (10) des ersten (1) und des zweiten Teils (4) an Frontflächen der Teile vorgesehen sind, die einander zugewandt sind.

7. Rollblende gemäß irgendeinem der Ansprüche 2 bis 6, wobei die Kupplungsmittel (10) des ersten (1) und des zweiten Teils (4) zusammenwirkende Vorsprünge und Aussparungen aufweisen.

8. Rollblende gemäß irgendeinem der vorhergehenden Ansprüche und Anspruch 3, wobei die relative Verlagerung des ersten (1) und des zweiten Teils (4) parallel zu der Mittellinie der Torsionsfeder (6) durch eine Verlagerung des zweiten Teils in der Richtung bewirkt wird.

9. Rollblende gemäß irgendeinem der vorhergehenden Ansprüche, wobei der Steuerungsstift (12) für einen Eingriff mit dem zweiten Teil (4) durch den ersten Teil (1) hindurch positionierbar ist.

10. Rollblende gemäß Anspruch 9, wobei der Steuerungsstift (12) und der zweite Teil (4) zusammenwirkende Verriegelungsmittel (16, 21) zum Verriegeln des ersten (1) und des zweiten Teils (4) in der Eingriffsposition aufweisen.

11. Rollblende gemäß Anspruch 10, wobei die Verriegelungsmittel mindestens einen Vorsprung (16) an dem Steuerungsstift (12) aufweisen, der durch eine relative Drehung bezüglich des zweiten Teils (4) in einer korrespondierenden unterschnittenen Nut (21) des zweiten Teils positionierbar ist.

12. Rollblende gemäß Anspruch 11, wobei die relative Drehung in einer Richtung ist, die mit der relativen Drehung zwischen dem ersten (1) und dem zweiten Teil (4) korrespondiert, die durch die Torsionsfeder (6) bewirkt wird.

## Revendications

1. Dispositif de store à rouleaux comprenant un logement stationnaire (5) et un tube d'enroulement de store (2) positionné de manière rotative dans ledit logement, et doté d'un moteur à ressort, comprenant une première partie (1) à relier de manière non rotative au tube d'enroulement de store, une seconde partie (4) à relier de manière non rotative au logement et un ressort de torsion (6) reliant la première partie à la seconde partie, dans lequel le moteur à ressort présente une première position opérationnelle, dans laquelle la première partie (1) peut tourner par rapport à la seconde partie (4), et une seconde position non opérationnelle, dans laquelle la première partie ne peut pas tourner librement par rapport à la seconde partie, **caractérisé en ce que** le moteur à ressort comprend une broche de commande (12) qui comprend, conjointement avec la seconde partie (4), des moyens de transmission de couple (17, 10) pour la transmission à la seconde partie (4) d'un couple appliqué à la broche de commande (12), et laquelle broche de commande (12) peut être reliée de manière non rotative à une roue dentée (23) positionnée dans le logement (5), qui peut tourner à l'aide d'un dispositif de transmission (24) pour la rotation de la broche (12) et ainsi de la seconde partie (4) par rapport au logement.

2. Store à rouleaux selon la revendication 1, dans lequel la première (1) et la seconde partie (4) sont dotées de moyens de couplage concourants (10) qui, dans la position opérationnelle du moteur à ressort, ne sont pas engagés les uns avec les autres et qui, dans la position non opérationnelle du moteur à ressort, sont engagés les uns avec les autres.

3. Store à rouleaux selon la revendication 2, dans lequel les moyens de couplage (10) de la première (1) et de la seconde partie (4) s'engagent et se désengagent les uns des autres par un déplacement relatif de la première et de la seconde partie parallèlement à une ligne médiane du ressort de torsion (6).

4. Store à rouleaux selon la revendication 3, dans lequel le ressort de torsion (6) est dimensionné de sorte à incliner la première (1) et la seconde partie (4) vers leur position engagée.

5. Store à rouleaux selon l'une quelconque des revendications 2 à 4, dans lequel les moyens de couplage (10) de la première (1) et de la seconde partie (4) dans leur position engagée permettent une rotation relative limitée entre la première et la seconde parties.

6. Store à rouleaux selon l'une quelconque des revendications 2 à 5, dans lequel les moyens de couplage (10) de la première (1) et de la seconde partie (4) sont prévus sur des surfaces frontales desdites parties se faisant face.

7. Store à rouleaux selon l'une quelconque des revendications 2 à 6, dans lequel les moyens de couplage (10) de la première (1) et de la seconde partie (4) comprennent des saillies et des évidements concourants.

8. Store à rouleaux selon l'une quelconque des revendications précédentes et la revendication 3, dans lequel le déplacement relatif de la première (1) et de la seconde partie (4) parallèlement à la ligne médiane du ressort de torsion (6) est causé par un déplacement de la seconde partie dans ladite direction.

9. Store à rouleaux selon l'une quelconque des revendications précédentes, dans lequel la broche de commande (12) peut être positionnée par la première partie (1) pour l'engagement de la seconde partie (4).

10. Store à rouleaux selon la revendication 9, dans lequel la broche de commande (12) et la seconde partie (4) comprennent des moyens de verrouillage concourants (16, 21) pour le verrouillage de la première (1) et de la seconde partie (4) dans la position engagée.

11. Store à rouleaux selon la revendication 10, dans lequel les moyens de verrouillage comprennent au moins une saillie (16) sur la broche de commande (12) qui peut être positionnée par une rotation relative par rapport à la seconde partie (4) dans une rainure contre-dépouillée correspondante (21) de la seconde partie.

12. Store à rouleaux selon la revendication 11, dans lequel ladite rotation relative est réalisée dans un sens correspondant à la rotation relative entre la première (1) et la seconde partie (4) causée par le ressort de torsion (6).
